Europäisches Patentamt

European Patent Office

Office européen des brevets

(11) Publication number: **0 574 019 A1**

# EUROPEAN PATENT APPLICATION

(21) Application number: **93109416.3**

(22) Date of filing: **11.06.93**

(51) Int. Cl.5: **H01M 4/62, H01M 4/00**

(30) Priority: **12.06.92 JP 179462/92**
    **12.06.92 JP 179463/92**

(43) Date of publication of application:
    **15.12.93 Bulletin 93/50**

(84) Designated Contracting States:
    **DE FR GB**

(71) Applicant: **FURUKAWA DENCHI KABUSHIKI KAISHA**
    **4-1, Hoshikawa 2-chome,**
    **Hodogaya-ku**
    **Yokohama-shi, Kanagawa-ken(JP)**

(72) Inventor: **Mizuno, Takashi, c/o Iwakijigyosho**
    **Furukawa Denchi**
    **K.K.,**
    **23-6, Kuidesaku,**
    **Joban Shimofunao-machi**
    **Iwaki-shi, Fukushima-ken(JP)**

(74) Representative: **Schmidt-Evers, Jürgen,**
    **Dipl.-Ing. et al**
    **Patentanwälte Mitscherlich & Partner,**
    **Sonnenstrasse 33,**
    **Postfach 33 06 09**
    **D-80066 München (DE)**

(54) **A hydrogen-occlusion electrode and a method of manufacturing thereof.**

(57) A hydrogen-occlusion electrode and a method of manufacturing thereof are described. The hydrogen-occlusion electrode comprises a hydrogen-occlusion alloy accounting for 42-84 vol.%, a bonding material PVdF for 3-13 vol.%, an electroconductive material for 3-15 vol.% and residual pores for 10-30 vo.%, and an average particle size of the electroconductive material is 1.3 $\mu$m or less, and the bonding material in the electrode is heat-treated. The hydrogen-occlusion electrode provides improved battery performance characteristics including charge-discharge cycle, discharge characteristics, and so on. In manufacturing the foregoing hydrogen-occlusion electrode, a formed electrode plate body including PVdF as a bonding material is manufactured, and is thereafter heat-treated in a vacuum or inert gas atmosphere at a temperature ranging from about 160 to about 200°C, so that there is obtained an electrode preventing the alloy particles from falling off therefrom, result- in an improvement of the mechanical strength and electro-conductivity thereof. When a hydrogen-occlusion electrode includes a thickener amounting to 0.5 wt.% or less based on the weight of the hydrogen-occlusion alloy, there is resulted in an improvement of the cahrge-discharge characteristics and the internal pressure of the battery.

Fig.1

EP 0 574 019 A1

The invention relates to a hydrogen-occlusion electrode and a method of manufacturing thereof.

For use as a negative electrode of sealed-type alkaline storage battery in which hydrogen is used as the active material for said negative electrode, there has been heretofore a hydrogen-occlusion electrode primarily comprising a hydrogen-occlusion alloy capable of occluding and releasing hydrogen.

To manufacture the hydrogen-occlusion electrode, a PTFE powder or a PE powder which is to serve as the bonding material is mixed with a hydrogen-occlusion alloy powder which is the main component of the electrode, and is heated to melt for bonding the partices of the alloy powder together by a network of the bonding material, or alternately, an unbaked PTFE powder is mixed with a hydrogen-occlusion alloy powder so as to be formed into fibers and a network of the fibers thereof may bond the particles of the alloy powder to one another in order to prevent the alloy powder particles from falling off. In this case, it has been a general practice that an electroconductive material such as a Ni (nickel) powder is added to the mixture in order to increase the oonductivity of the electrode, and a thickener such as CMC is further added to the mixture so as to make the mixture slurry, so that the resultant slurry mixture may be applied to porous or perforated electroconductive substrate, dried, and rolled to a predetermined thickness, and then the resultant formed electrode plate body is heat-treated in a vacuum or inert gas atmosphere, so that a hydrogen-occlusion electrode is manufactured.

With any hydrogen-occlusion manufactured by any conventional manufacturing method mentioned above, however, it has been observed that, as the electrode is repeatedly subjected to charge-discharge operations in an alkaline electrolyte while in use as a negative electrode of a storage battery, further pulverization of the hydrogen-occlusion alloy powder contained therein takes place and the resultant finer particles of the hydrogen alloy powder are fallen off from the electrode. This results in not only in a capacity decrease of the battery, but in sharp deterioration of both the mechanical strength and electroconductivity of the electrode, and these making it difficult to maintain a desired high capacity for a long time.

Also it has been general with the conventional hydrogen-occlusion electrode containing the thickener that a content of the thickener is about 1 wt.% based on the weight of the hydrogen-occlusion alloy of the electrode.

However, this causes such problems that the surfaces of the particles of the alloy become covered with the thickener, resulting in a lower activity of the electrode, a comparatively short life in terms of charge-discharge cycles, and a higher internal pressure of the sealed-type storage battery. So that it is much desired to get rid of these disadvantages.

A primary object of the present invention is to provide a hydrogen-occlusion electrode which eliminates the above-mentioned inconveniences observed with a conventional hydrogen-occlusion electrode and improves the charge-discharge cycle life as well as the capacity retention or presrvation rate, and so on.

The hydrogen-occlusion electrode according to the present invention is characterized in that it comprises a hydrogen-occlusion alloy accounting for 42 to 84 vol.%, a bonding material for 3 to 13 vol.%, an electroconductive material for 3 to 15 vol.% and residual pores for 10 to 30 vol.%, all in terms of volume percentage, said bonding material being polyvinylidene fluoride and said electroconductive material having the average particle size of 1.3 $\mu$m or smaller, and is heat-treated.

Another object of the present invention is to provide a method of manufacturing a hydrogen-occlusion electrode which eliminates the above-mentioned inconveniences observed with a conventional method of a hydrogen-occlusion electrode and improves the battery characheristics such as charge-discharge cycle life, discharge characteristics, and so on.

The method of manufacturing a hydrogen-occlusion electrode according to the present invention is characterized in that in manufacturing the electrode of the present invention as above, a formed electrode plate body is manufactured with polyvinylidene fluoride used as the bonding material, and the formed electrode plate body is heat-treated in a vacuum or inert gas atmosphere at a temperature in the range of about 160°C to about 200°C.

Further another object of the present invention is to provide a hydrogen-occlusion electrode which eliminates the above-mentioned disadvantages with the conventional hydrogen-occlusion electrode manufactured by steps of mixing a hydrogen-occlusion alloy powder as a main component, an electroconductive material, a bonding material and a thickener together with water to make a slurry mixture, applying the resultant slurry mixture to an electroconductive porous or perforated substrate, drying and pressing, and which improves the charge-discharge cycle life characteristics and the inner pressure of a sealed storage battery.

The hydrogen-occlusion electrode according to the present invention is characterized in that it contains the thickener amounting to 0.5 wt.% or less based on the weight of the hydrogen-occlusion alloy.

In this case, it is preferable that at least one kind selected from a group comprising CMC, MC, PVA, HPMC and PEO is used as the thickener.

FIGURE 1 is a graph showing the charge-discharge characteristics of hydrogen-occlusion electrodes manufactured according to the present invention and those manufactured for the comparison purpose.

FIGURE 2 is a graph showing the improvement effects obtained on the charge-discharge characteristics of the batteries using the hydrogen-occlusion electrodes of the present invention.

Embodiments of a hydrogen-occlusion electrode and a method of manufacturing thereof according to the present invention are described in further detail through preferred specific examples as follows.

A hydrogen-occlusion alloy that can be used for manufacturing a hydrogen-occlusion electrode according to the present invention may be such an alloy of MmNi system or that of any other known composition. When the compounding ratio of the alloy in the electrode is less than 42 vol.%, there can not be obtained a desired high capacity of the electrode. On the other hand, when it is in excess of 84 vol.%, the relative quantities of the bonding material and the electroconductive material have to be decreased, so that the holding the alloy particles in position by the bonding material becomes less secure and the electroconductivity of the electrode becomes lower, so that a predetermined disirable electrode can not be obtained, in either case as above.

Especially using polyvinyliden fluoride (PVdF) as the bonding material is advantageous in that it is alkali-resistant and can be heat-treated sufficiently at a temperature in the range of 160°C to 200°C as compared with polytetrafluoroethylene (PTFE) that requires a much higher heating temperature as well as a special expensive furnace for the heat-treatment thereof because its melting temperature is as high as about 350°C.

Thus, when a formed electrode plate body in which polyvinylidene fluoride and the hydrogen-occlusion powder are included is heated at a temperature in the range of about 60°C to about 200°C to have particles of the bonding material melted or near-melted, so that the particles of polyvinylidene fluoride are bonded together to form a network thereof and particles of the powdered alloy are securely bonded one to another by means of the bonding network of the bonding material that can accomodate to expansion and contraction in volume of the alloy. This is also advantageous. When the heat treatment temperature is lower than about 160°C, particles of the bonding material are not bonded to one another sufficiently and, as a result, fine particles of the alloy can not be held securely in position thereby. When it is higher than about 200°C, the surface inactivation of the alloy particles is liable to be caused, which is undesirable. Regarding the electroconductive material, any one such as carbonyl nickel that gives good electroconductivity is preferable. As will be discussed more in detail hereinafter, when the average particle size of the electroconductive material is bigger than 1.3 $\mu$m, it is difficult for the material to enter the spaces between the alloy particles, so that the surface covered with sufficiently therewith and a lower coefficient of utilization of the electrode is resulted. Regarding the thickener, which is necessary for making a slurry mixture of the powdered alloy, bonding material and electroconductive material, any desired one of known thickeners such as CMC, MC, PVA, etc. will do.

Thus, a slurry having a predetermined viscosity is prepared from the mixture comprising a desired hydrogen-occlusion alloy powder, a PVdF powder, a carbonyl nickel powder, a CMC powder and a suitable amount of water or an organic solvent. The slurry mixture is then applied to both sides of a porous or perforated electroconductive substrate, so as to fill therein and/or form thereon a pasted layer thereof having an appropriate thickness, and the pasted substrate is then dried and is rolled or pressed to produce a formed electrode plate body having a predetermined thickness. Thereafter, the formed electrode plate body is put into a heating chamber such as a furnace, and it is heated in a vacuum atmosphere or in an inert gas atmosphere of nitrogen, argon or the like at a temperature ranging from about 160°C to about 200°C for a required length of time, thereby there is manufactured a hydrogen-occlusion electrode having the residual pores accounting for 10 to 30 vol.% as proposed by the present invention. In the case of the residual pores accounting for less than 10 vol.%, gas absorption by the electrode becomes poor, while if the residual pores account for more than 30 vol.%, the active material is likely to fall off from the electrode and a high capacity can not be obtained.

An embodiment example of the present invention will now be described further in detail in the following.

A hydrogen-occlusion powder obtained by mechanically pulverizing a hydrogen-occlusion alloy comprising $MmNi_{3.5}Co_{1.0}Al_{0.5}$, a polyvinylidene fluoride (PVdF) powder to serve as a bonding material, and a carbonyl nickel powder(manufactured by using the carbonyl refining process) having the average size of 1.3 $\mu$m serving as an electroconductive material were mixed in the ratios in terms of volume percentage as shown in Table 1 below. A predetermined quantity of 1% water solution of CMC serving as a thickener was added to each of the mixtures thus prepared as above, and agitated to be uniformly mixed together to obtain a slurry of the mixture. Each of the slurry mixtures so obtained was applied to both side surfaces of a porous or perforated nickel sheet or substrate, and then was dried and roll-pressed to form a hydrogen-occlusion electrode plate body. Each of the formed electrode plate bodies was then put into a furnace, and heated under a vacuum atmosphere at a temperature in the range of about 160°C to about 200°C, for instance, at 170°C, for two hours. Thus, there were manufactured the hydrogen-occlusion electrodes A through Q, respectively, as shown in Table 1.

Further, for the purpose of comparison, a hydrogen-occlusion electrode R was manufactured in the same manner as above except that a polyethylene (PE) powder was added in stead of the above-mentioned PVdF powder as the bonding material. A hydrogen-occlusion electrode S was manufactured in such a manner that a polytetrafluoroethylene (PTFE) powder was added in stead of the foregoing PVdF as the bonding material, and no CMC as the thickener was added to the mixture, and the mixture was agitated so that the foregoing PVdF powder may be formed into fibers, and the mixture containing the fibrous PTFE was applied and press-bonded to both side surfaces of the porous or perforated nickel sheet or substrate to form an electrode plate body which was thereafter not subjected to the above-mentioned heat treatment. Further, another hydrogen-occlusion electrode T was manufactured in the same as above except that a nickel carbonyl powder having the average particle size of 2.8 $\mu$m was used as the electroconductive material in place of the carbonyl nickel powder having the average particle size of 1.3 $\mu$m as mentioned above. The residual porosity in terms of volume percentage for each of the electrodes A through T was as shown in Table 1.

TABLE 1

(Unit: Vol.%)

| ELECTRODE | HYDROGEN-OCCLUSION ALLOY | BONDING MATERIAL | ELECTROCONDUCTIVE MATERIAL | RESIDUAL PORES |
|---|---|---|---|---|
| A | 69 | 3 | 8 | 20 |
| B | 67 | 5 | 8 | 20 |
| C | 64 | 8 | 8 | 20 |
| D | 61 | 11 | 8 | 20 |
| E | 59 | 13 | 8 | 20 |
| F | 69 | 8 | 3 | 20 |
| G | 67 | 8 | 5 | 20 |
| H | 61 | 8 | 11 | 20 |
| I | 57 | 8 | 15 | 20 |
| J | 74 | 8 | 8 | 10 |
| K | 69 | 8 | 8 | 15 |
| L | 71 | 1 | 8 | 20 |
| M | 57 | 15 | 8 | 20 |
| N | 71 | 8 | 1 | 20 |
| O | 54 | 8 | 18 | 20 |
| P | 79 | 8 | 8 | 5 |
| Q | 49 | 8 | 8 | 35 |
| R | 64 | 8 | 8 | 20 |
| S | 64 | 8 | 8 | 20 |
| T | 64 | 8 | 8 | 20 |

Each of the electrode plates A through T was used as a negative electrode and, together with a nickel electrode plate serving as a positive electrode, it was stacked in a laminate fashion with a nylon separator as thin as 0.18 mm interposed therebetween to form a battery element. The resultant battery element was rolled up to make a spiral battery element. This spiral battery element was put into a nickel-plated steel-made cylindrical container by a known ordinary method. A prescribed alkaline electrolyte aqueous solution was poured into the container and a cover was attached thereto and was hermetically sealed, so that there was manufactured a sealed-type cylindrical storage battery. As for the positive electrode plate as above, it was manufactured as follows. A nickel hydroxide powder was mixed with a carbonyl nickel powder, and then was added with a 1.2% water solution of CMC and thereafter was mixed to make a slurry mixture. This slurry mixture was applied to a foam nickel substrate to fill up its pores therewith, and thereafter was dried and roll-pressed to manufacture the positive electrode plate. The storage batteries manufactured as above using the electrodes plates A through T as the negative electrode, were referred to as batteries A through T.

A charge-discharge cycle test, an internal pressure test, and a discharge test using different discharge rates were carried out on the foregoing batteries A through T as follows. Those batteries A through T were all an AA-type, 1100mAh battery.

1) Charge-discharge cycle test:

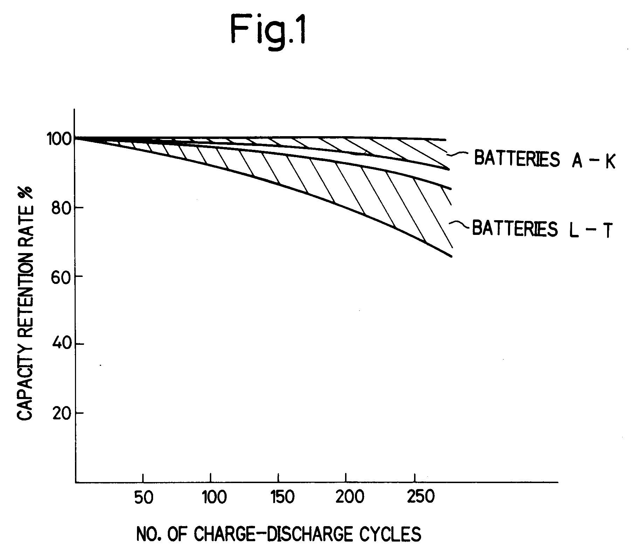

For the charge-discharge cycle test, each battery was charged with 1100mA current for 75 minutes and discharged also with 1100mA current to the final voltage of 1V. This test was carried out at a room temperature. The test rusults are as shown in Fig. 1.

As is clearly seen from Fig. 1, the batteries A through K are very small in capacity drop thereof even with progress in the number of times of charge-discharge cycles, whereas the batteries L through T are very large in capacity drop thereof with progress in the number of times of charge-discahrge cycles. The cause thereof is considered, in the light of Fig. 1, as follows: Due to the facts that a coumpounding amount of the bonding material is too small as seen in the case of the negative electrode L of the battery L, and that there is used as the bonding material the heat-treated molten PE and the fibrous PTFE not heat-treated, that is, unbaked, in stead of the heat-treated PVdF, even though the amount of the bonding material is sufficient, as seen-in the cases of the negative electrode R of the battery R and the negative electrode S of the battery S, it is considered that there was resulted such inconveniences that the particles of the alloy are broken into finer pieces through the repition of charge-discharge operation to result in their falling off easily from the electrode, and also the deterioration of both the mechanical strength and conductivity of the electrode are resulted. On the other hand, when the compounding amount of the bonding material is too much in the case of the battery M of the battery M, it has been observed that the polarization characteristics of the negative electrode is deteriorated and the coefficient of utilization of the negative electrode is lowered. Further, when the amount of the electroconductive material is too small as seen in the case of the negative electrode L of the battery L, the electroconductivity thereof is lowered, and accordingly the coefficient of utilization thereof is lowered. Conversely, the amount of the electroconductive material is too much as seen in the case of the negative electrode O of the battery O, there has been observed no improvement proportional to the increased amount thereof with respect of the electroconductivity, and a shorter battery life in terms of charge-discharge cycles is resulted, the reason of which is yet unknown. Further, when the amount of the residual pores are so low as seen in the case of the negative electrode P of the battery P, it is considered that the gas absorptivity of the electrode is poor, so that a good charge-discharge characteristics can not be maintained for a long time and is easily deteriorated. Conversely, when the residual porosity is too high as seen in the case of the negative electrode Q of the battery Q, it has been observed that the alloy particles are liable to be fallen off from the electrode more easily and the coefficient of utilization of the electrode is lowered sharply. Further, when the average particle size of the electroconductive material is too large even with the sufficient compounding amount thereof as seen in the case of the negative electrode T of the battery T, it is assumed that it has a bad influence on the electroconductivity and the coefficient of utilization of the electrode is deteriorated.

In contrast with those negative electrodes mentioned above, the negative electrodes A through K of the batteries A through K in which the composition ratios of the hydrogen-occlusion, the bonding material and the electroconductive material and the residual porosity are as shown in Table 1, the electroconductive material being PVdF heat-treated, and the average particle size of the electroconductive material being 1.3 $\mu$m or less, have such effects that the network formed by the heat-treated bonding material holds firmly the fine particles of alloy in position to prevent them from falling off from the electrode and at the same time reinforces the mechanical strength of the electrode, and the fine particles of the electroconductive material are adhered to the surfaces of the fine alloy particles as if to plate the latter, assuring a good electroconductivity which results in a satisfactory coefficent of utilization of the electrode, and also the porosity of the electrode formed by the residual pores accounting for the volume percent as indicated in Table 1, brings about a good gas absorptivity, a good infiltration and diffusion of the electrolyte into the electrode and a good occlusion and release of hydrogen in conjunction therewith, and as a result it is assumed that the capacity drop with progress in the number of times of charge-discharge cycles can be kept very small, resulting in remaining practically the capacity as high as in the initial state of the charge-discharge operation.

2) Internal pressure test:

The internal pressure test was carried out in such a manner that all the batteries were charged with 1100mA current for 4.5 hours, and discharged with 220mA current to the final voltage of 1V. The charge-discharge operation was carried out at 20°C. The test rusults are shown in the following Table 2.

TABLE 2

| BATTERY | INTERNAL PRESSURE | | BATTERY | INTERNAL PRESSURE | |
|---------|-------------------|------------------|---------|-------------------|------------------|
|         | (bar) | $(Kgf/cm^2)$ * |         | (bar) | $(Kgf/cm^2)$ |
| A | 5.1 | 5.2 | L | 14.8 | 15.1 |
| B | 5.0 | 5.1 | M | 24.8 | 25.3 |
| C | 4.71 | 4.8 | N | 11 | 11.2 |
| D | 6.37 | 6.5 | O | 13.3 | 13.6 |
| E | 7.84 | 8.0 | P | 20.6 | 21.0 |
| F | 5.39 | 5.5 | Q | 29.6 | 30.2 |
| G | 4.9 | 5.0 | R | 16.4 | 16.7 |
| H | 6.77 | 6.9 | S | 14.1 | 14.4 |
| I | 8.0 | 7.0 | T | 12.9 | 13.2 |
| J | 7.35 | 7.5 | | | |
| K | 5.69 | 5.8 | | | |

* 1 Kgf (Kilogramforee)/$cm^2$ = 0.980665 bar

As is clearly from Table 2, the batteries A through K were all low in their internal pressure, whereas the batteries L through T were remarkably high even when overchared with such a large current. It is assumed that this difference observed with respect to the internal pressures thereof should have come from a different ratio in terms of volume percentage of the components for each electrode as shown in Table 1, use of a different bonding material and that of a different electroconductive material, and whether the heat-treated or not, all of which should be factors causing differences in such aspects as hydrogen occlusion-release performance, charge-discharge performance, electroconductivity attributable to the electroconductive material used, bonding characteristics, and gas absorptivity.

3) Discharge test using different discharge rates:

The discharge test was carried out in such a manner that all the batteries were charged with 220mA for 7.5 hours and discharged to the final voltage of 1V using three different discharge rates, namely, 220mA-(0.2C), 1650mA(1.5C) and 3300mA(3.0C). This test was carried out at 20°C. The test results are as shown in the following Table 3.

TABLE 3

(Unit: mAh)

| Battery | 0.2 C | 1.5 C | 3.0 C |
| --- | --- | --- | --- |
| A | 1198 | 1078 | 982 |
| B | 1190 | 1055 | 975 |
| C | 1189 | 1080 | 990 |
| D | 1150 | 1022 | 966 |
| E | 1144 | 1011 | 956 |
| F | 1177 | 1068 | 973 |
| G | 1170 | 1062 | 977 |
| H | 1172 | 1067 | 970 |
| I | 1169 | 1065 | 971 |
| J | 1174 | 1058 | 968 |
| K | 1178 | 1064 | 963 |
| L | 1189 | 1055 | 961 |
| M | 1155 | 924 | 751 |
| N | 1160 | 986 | 812 |
| O | 1180 | 1060 | 965 |
| P | 1183 | 1063 | 973 |
| Q | 1130 | 920 | 740 |
| R | 1166 | 1014 | 898 |
| S | 1173 | 1009 | 889 |
| T | 1159 | 989 | 869 |

As is clearly from Table 3, it has been found that the batteries A through K are very small in their capacity drop even with a very large current as compared with the batteries L through T, and have a good discharge characteristics.

Thus, the batteries A through K have good results as above with respect to all of the charge-cischarge cycle test, the internal pressure test and the discharge test using different discharge rates above. Taking into account these test results, various tests and researches were further made concerning the compositions of the electrodes of the electrode A through K to confirm that it should comprise a hydrogen-occlusion alloy accounting for 42 to 84 vol.%, PVdF serving as a bonding material for 3 to 13 vol.%, an electroconductive material for 3 to 15 vol.% and the residual pores for 10 to 30vol.%, the average particle size of the electroconductive material being 1.3 $\mu$m or less and that in manufacturing of the present invention electrode, as long as the electrode body having the above constructional elements is heated at a temperature in the range of about 160°C to about 200°C under a vacuum or inert gas atmosphere, there can be obtained such excellent charge-discharge cycle life, discharge characteristics and low internal pressure characteristics as described above, and the negative electrode for a sealed-type alkaline storage battery having the above excellent characteristics can be obtained easily and economically.

Further, according to the present invention, it has has been confirmed that there can be obtained a hydrogen-occlusion electrode for a storage battery having improved charge-discharge cycle characteristics and internal pressure characteristics by containing therein a thickener amounting to 0.5 wt.% or less based on the weight of a hydrogen-occlusion alloy.

As for the thickener, any kind selected from among CMC, MC, PVA, HPMC and PEO is preferably used.

A hydrogen-occlusion alloy contained in the hydrogen-occlusion electrode occludes and releases hydrogen in an aqueous solution of alkaline electrolyte during the charge and the discharge. Such occlusion and release of hydrogen take place right on the alloy's surfaces exposed to the electrolyte. According to the present invvention, when the thickener content is specifically limited to 0.5wt.% or less, the exposed surfaces of the alloy is increased as compared with the conventional electrode in which about 1 wt.% of the thickener based on the weight of the hydrogen-occlusion alloy of the conventional electrode is contained, so that there is about a longer charge-discharge cycle life, a higher capacity retention or preservation rate and a lower internal pressure of a sealed-type alkaline storage battery.

Now, an embodiment example of the present invention will be described in detail as follows.

Any desired hydrogen-occlusion alloy power of MmNi system or the like, an electroconductive material such as a nickel powder or the like, a powdered bonding material such as a polyvinylidene fluoride (PVdF) powder, a polytetrafluoroethylene (PTFE) powder or the like and a thickener amounting to 0.5 wt.% or less based on the weight of the hydrogen-occlusion alloy powder are altogether mixed with an appropriate quantity of water, and kneaded in a conventional manner to prepare a slurry mixture of them that has a suitable viscosity allowing the slurry to be applied in a uniform thickness to the surface of an electroconductive, porous or perforated substrate.

The thickener may be carboxymethyl cellulose (CMC), methyl cellulose (MC), polyvinyl alcohol (PVA), hydroxypropylmethyl cellulose (HPMC), polyethylene oxide (PEO) or the like as desired. For actual use, it is usual that the thickener is prepared in the form of a solution in which the thickener is dissolved in water or an organic solvent.

Using an ordinary process, this slurry is applied, from both sides, to both side surfaces of the electroconductive, porous or perforated substrate such as a wire guaze, punched or expanded type metal sheet, a foam type metal sheet or the like so that the thickener may be filled therein and a proper thick layer thereof may be formed thereon, and the resultant pasted electrode plate is then dried and roll-pressed, so that a formed electrode plate body is obtained. This formed electrode plate body is then heated at a temperature for melting the bonding material or nearly at the temperature under a vacuum or an inert gas atmosphere for a required period of time, so that a hydrogen-occlusion electrode plate is manufactured.

This electrode plate is used as a negative electrode and, together with a positive electrode plate is stacked in a laminate fashion with a separator interposed therebetween in an ordinary known manner, so as to assemble a storage battery element. This battery element is wound into a spiral form and is put into a cylindrical battery container, or it is not wound and directly is put into a square battery container, as the occasion demands. Thereafter, a predetermined amount of an alkaline electrolyte is poured into the battery container, and a cover is applied thereto and sealed hermetically, so that a sealed-type alkaline storage battery is produced.

Since the content of the thickener contained in the hydrogen-occlusion electrode manufactured according to the present invention is very small, the surfaces of the particles of hydrogen-occlusion alloy hardly are covered with the thickener, so that the active surfaces exposed to the electrolyte are increased in area, and due to increase in the active surface area performing the occlusion and release of hydrogen, there is brought about such favorable effects as a longer battery life in terms of charge-discharge cycles, a higher capacity retention rate and a lower internal pressure in a sealed-type alkaline storage battery as will be described more specifically and demonstrated more clearly in the following.

Now, embodiment examples of the present invention will be explained more in detail together with a comparison example.

Example 1

A hydrogen-occlusion alloy composed of $MnNi_{3.5}Co_{1.0}Al_{0.5}$ was pulverized into fine particles to produce a hydrogen-occlusion alloy powder. An INCO Type-210 nickel powder amounting to 15 wt.% based on the weight of the alloy powder was added to the alloy powder as the electroconductive material and also a PVdF powder amounting to 3 wt.% based on the weight of the alloy powder was added thereto so that a mixture of them may be obtained. As the thickener, a CMC powder amounting to 0.10 wt.% based on the weight of the alloy powder was dissolved in water to prepare an aqueous solution of the thickener, which was then added to the mixture mentioned above, and they are mixed uniformly and kneaded together to obtain a slurry mixture. This slurry mixture was applied to both side surfaces of a perforated nickel substrate sheet, dried and roll-pressed to obtain a formed electrode plate body. This formed electrode plate body was put into a furnace where it was heated at 170°C for 2 hours in a vacuum atmosphere to manufacture a hydrogen-occlusion electrode plate. This electrode plate was designated as "electrode a" of the present invention.

Example 2

Except that the amount of the thickener CMC was added for 0.5 wt.% based on the weight of the above-mentioned hydrogen-occlusion alloy powder, the same conditions and process as in the Example 1 above were carried out to manufacture another hydrogen-occlusion electrode plate according to the present invention. This electrode was designated as "electrode b" of the present invention.

Comparison example

Except that the amount of the thickener CMC was added for 0.80 wt.% based on the weight of the above-mentioned hydrogen-occlusion alloy powder, the same conditions and process as in the Example 1 above were carried out to manufacture a hydrogen-occlusion electrode plate which was designated as "comparison electrode c".

Next, each of the electrode a and electrode b of the present invention and the comparison electrode c described above was used as a negative electrode. Together with a positive electrode plate, the above-mentioned each negative electrode was stacked in a laminate fashion with a 18mm thick nylon separator interposed therebetween, and then wound into a spiral form so that a spiral battery element was obtained. Each of the respective battery elements was inserted into a cylindrical nickel-palted steel container. A predetermined quantity of the alkaline electrolyte was poured into the battery container, and a cover was then attached thereto to hermetically seal the container, thereby manufacturing a cylindrical sealed-type Ni/MH storage battery. The positive electrode plate used above was manufactured as follows. A nickel hydroxide powder was mixed with an INCO type-255 Ni powder and further with a water solution of CMC to make a slurry mixture and this slurry mixture was applied to a foam nickel substarate plate to fill up the pores thereof and dried and roll-pressed to a predetermined thickness to produce a positive electrode plate.

Using a battery A provided with the electrode a of the present invention, a battery B provided with the electrode b of the present invention, and a comparison battery C provided with the comparison electrode c, a charge-discharge cycle test and an internal pressure test were carried out as described below. Those batteries to be tested were all an AA-size battery having the rated capacity of 1000 mAh.

1) Charge-discharge cycle test:

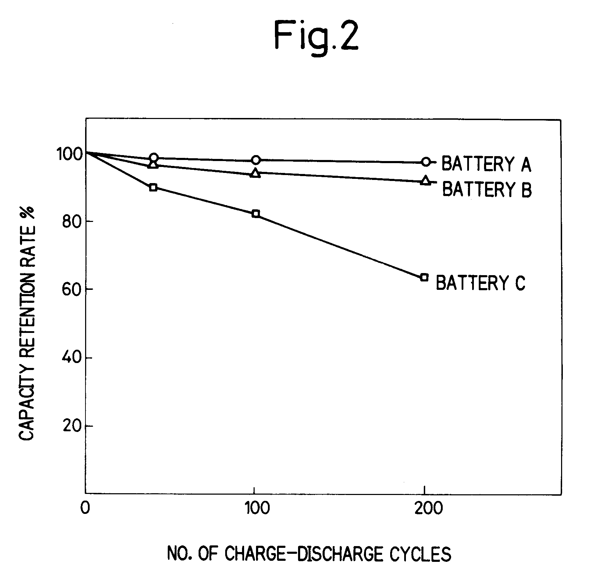

For the charge-discharge cycle test, each battery to be tested was charged with 1A current for 75 minutes and discharged with 1A current to the final voltage of 1V. This test was carried out at a room temperature. The test results are as shown in Fig. 2.

As is clearly indicated in Fig. 2, the battery C is large in decrease in the capacity thereof with progress in the number of times of charge-discharge cycles, whereas the battery A and battery B each provided with the negative electrode of the present invention are little decreased in the capacity thereof and maintain a 90% or higher capacity retention rate even at the 200th cycle of the charge-discharge operation. The reason for making this difference may very well be that whereas, with the battery C provided with the electrode c as negative electrode containing a greater amount of the thickener CMC in terms of weight percentage, the negative electrode should have had almost all surfaces of the particles of powdered alloy therein covered with the CMC to leave a much smaller area of the exposed surface that actually functions to occlude and release hydrogen and, as such, it failed to effectively cope with the high-rate current of 1A used in the charge-discharge operation, the battery A provided with the electrode a as its negative electrode and the battery B provided likewise with the electrode b should have had such smaller portions of the surfaces of the particles of powdered alloy covered with the CMC because they contained much less CMC, so that the area of surface exposed to the electrolyte should have been much greater and as a result a high surface activity capable of occluding and releasing hydrogen efficiently even at the time of charge and discharge operation with high-rate current of 1A was maintained.

2) Internal pressure test:

For the internal pressure test, the batteries to be tested were charged with 1A current for 4.5 hours and discharged with 0.2A current to the final voltage of 1V. This test was carried out at the temperature of 20°C. The test results are as shown in the following Table 4.

TABLE 4

| Battery | Internal pressure | |
|---|---|---|
| | bar | (Kgf/cm$^2$) |
| A | 5.88 | 6 |
| B | 5.88 | 6 |
| C | 11.76 | 12 |

As is clearly seen from Table 4, the battery A provided with the electrode a of the present invention and the battery B with the electrode b of the present invention showed a much lower internal pressure as compared with the battery C. It is therefore assumed that, in case of use of the electrode a and the electrode b, more surface areas of the hydrogen-occlusion alloy particles therein remained not covered with CMC, which means a greater area of the exposed surface of the alloy, and this should have enabled them to efficiently absorb oxygen generated from the positive electrodes and at the same time offer a higher charge efficiency, all these combining to prevent the negative electrode from generating, and consequently lower the internal pressure.

As compared with the above case, in case of use of the battery C, it is assumed that the hydrogen-occlusion alloy particles in the negative electrode thereof should have had almost all of their surfaces covered with CMC to leave a very small portion thereof exposed to the electolyte, so that it was not able to absorb efficiently oxgen generated from the positive electrode and caused the charge efficiency of the negative electrode to become lower, all these combining to give rise to the remarkable high internal pressure.

Further, it has been found out through researches including a number of tests and experiments that the same effects as noted above can be otained when the compounding ratio of a thickener is up to 0.5 wt.% based on the weight of the hydrogen-occlusion alloy in the electrode. It has further been discovered that with a thickener content being less than 0.01 wt.% it is quite difficult to handle the mixture adequately and that it is prefereble to contain more than 0.01 wt.%.

Thus, according to the present invention described in the foregoing, the content of a thickener in a hydrogen-occlusion electrode is 0.50 wt.% or lower in terms of the compounding ratio based on the weight of the hydrogen-occlusion alloy, so that when this electrode is used as a negative electrode for a sealed-type storage battery, there can be obtained an improved charge-discharge characteristics and a remarkable lowering of the internal pressure.

**Claims**

1. A hydrogen-occlusion electrode characterized in that it comprises a hydrogen-occlusion alloy accounting for 42 to 84 vol.%, a bonding material for 3 to 13 vol.%, an electroconductive material for 3 to 15 vol.% and residual pores for 10 to 30 vol.%, all in terms of volume percentage, said bonding material being polyvinylidene fluoride and said electroconductive material having the average particle size of 1.3 $\mu$m or smaller, and is heat-treated.

2. A method of manufacturing a hydrogen-occlusion electrode characterized in that, in manufacturing the hydrogen-occlusion electrode as claimed in claim 1, a formed electrode plate body is manufactured with polyvinylidene fluoride used as the bonding material, and is then heat-treated in a vacuum or inert gas atmosphere at a temperature in the range of about 160°C to about 200°C.

3. A hydrogen-occlusion electrode manufactured by mixing a hydrogen-occlusion alloy powder as a main component, an electroconductive material, a bonding material and a thickener together with water to make a slurry mixture, applying the resultant slurry mixture to an electroconductive porous or perforated substrate, drying and pressing, an improvement being that it contains said thickener amounting to 0.5 wt.% or less based on the weight of the hydrogen-occlusion alloy.

4. A hydrogen-occlusion electrode as claimed in claim 3, wherein the thickener is at least one kind selected from a group comprising carboxymethyl cellulose (CMC), methyl cellulose (MC) polyvinyl alcohol (PVA), hydroxypropylmethylcellulose (HPMC) and polyethylene oxide (PEO).

# Fig.1

Graph: CAPACITY RETENTION RATE % (y-axis, 20, 40, 60, 80, 100) vs NO. OF CHARGE–DISCHARGE CYCLES (x-axis, 50, 100, 150, 200, 250), showing bands labeled BATTERIES A – K and BATTERIES L – T.

# Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | PATENT ABSTRACTS OF JAPAN vol. 17, no. 89 (E-1323)22 February 1993 & JP-A-42 82 559 ( FURUKAWA BATTERY CO. LTD. ) 7 October 1992 * abstract * | 1-4 | H01M4/62 H01M4/00 |
| A | DATABASE WPI Week 8018, Derwent Publications Ltd., London, GB; AN 80-32121C & JP-A-50 135 534 (MATSUSHITA ELEC. IND. K.K.) 27 October 1975 * abstract * | 1-4 | |
| A | FR-A-2 566 188 (CENTRAL GLASS COMPANY LTD.) 20 December  1985 * claims 1-9 * | 1-4 | |
| X | EP-A-0 419 221 (TOSHIBA BATTERY CO. LTD.) 27 March 1991 * claims 1-6 * | 3,4 | **TECHNICAL FIELDS SEARCHED (Int. Cl.5)** |
| X | PATENT ABSTRACTS OF JAPAN vol. 13, no. 88 (E-721)28 February 1989 & JP-A-63 266 768 ( MATSUSHITA ELECTRIC IND. CO. LTD. ) 2 November 1988 * abstract * | 3,4 | H01M |

The present search report has been drawn up for all claims

| Place of search | Date of completion of the search | Examiner |
|---|---|---|
| THE HAGUE | 30 SEPTEMBER 1993 | BATTISTIG M.L.A. |

EPO FORM 1503 03.82 (P0401)